# EUROPÄISCHE PATENTANMELDUNG

(11) **EP 0 610 723 A1**
(43) Veröffentlichungstag der Anmeldung: **17.08.1994**
(21) Anmeldenummer: 94101149.6
(22) Anmeldetag: 27.01.1994
(51) Int. Cl.: C02F 1/48

(54) **Vorrichtung zur Behandlung einer Flüssigkeit und Verfahren zur Verlängerung der Lebensdauer einer solchen Vorrichtung**

(30) Priorität: 10.02.1993 DE 4303723
(71) Anmelder: VALENTRON AG, CH-9050 Appenzell (CH)
(72) Erfinder: Schwarting, Georg, F-98000 Monaco (FR)
(74) Vertreter: Jabbusch, Wolfgang, Dr.Jur. Jabbusch, Wehser & Lauerwald Patentanwälte

(57) **Zusammenfassung**

Die Erfindung betrifft eine Vorrichtung zur Behandlung einer Flüssigkeit, insbesondere einer wässrigen Flüssigkeit, vorzugsweise zur Vermeidung, Verminderung oder Beseitigung von Ablagerungen und/oder Korrosion in von der behandelten Flüssigkeit durchströmten Leitungen oder Gefäßen, umfassend wenigstens einen Flüssigkeitsbehandlungsweg, dem wenigstens eine gegenüber dem Flüssigkeitsbehandlungsweg vorzugsweise elektrisch isolierte Elektrode zugeordnet ist.

Der Erfindung liegt die Aufgabe zugrunde, eine Vorrichtung der genannten Gattung dahingehend weiterzubilden, daß mit ihr auf sich ändernde Kapazitätsbedürfnisse in ökonomischer Weise reagiert werden kann.

Diese Aufgabe wird erfindungsgemäß dadurch gelöst, daß mehrere Flüssigkeitsbehandlungswege, im wesentlichen parallel zueinander, wahlweise miteinander verbindbar sind.

## Beschreibung

Die Erfindung betrifft eine Vorrichtung zur Behandlung einer Flüssigkeit, insbesondere einer wässrigen Flüssigkeit, vorzugsweise zur Vermeidung, Verminderung oder Beseitigung von Ablagerungen und/oder Korrosion in von der behandelten Flüssigkeit durchströmten Leitungen oder Gefäßen, umfassend wenigstens einen Flüssigkeitsbehandlungsweg, dem wenigstens eine gegenüber dem Flüssigkeitsbehandlungsweg vorzugsweise elektrisch isolierte Elektrode zugeordnet ist, wenigstens einen Elektrokontakt, vorzugsweise als gegengepolte Elektrode zur vorgenannten Elektrode, für die Flüssigkeit und vorzugsweise eine elektrische Spannungsquelle, insbesondere eine Hochspannungsquelle, bevorzugt eine Gleichspannungsquelle, zur elektrischen Versorgung der Elektrode bzw. Elektroden.

Weiter betrifft die Erfindung ein Verfahren zur Verlängerung der Lebensdauer einer vorgenannten Vorrichtung.

Eine Vorrichtung der vorgenannten Gattung ist z.B. aus der EP-PS 0 282 476 bekannt.

Mit einer solchen Vorrichtung soll unter Einsatz eines elektrischen Feldes eine Flüssigkeit, vorzugsweise Wasser, so behandelt werden, daß Leitungen und Gefäße von Ablagerungen und/oder Korrosionen möglichst weitgehend verschont bleiben. Zur Ausbildung des elektrischen Feldes wird bevorzugt eine Hoch-Gleichspannungsquelle eingesetzt. Unter Umständen ist es auch denkbar, statisch aufgeladene Elektroden ohne Stromversorgung einzusetzen.

Obwohl die bekannte Vorrichtung von ihrem Prinzip nach tadellos arbeitet, besteht im Zusammenhang mit dieser bekannten Vorrichtung ein Problem.

Je nach dem, welche Menge von Flüssigkeit pro Zeiteinheit mit einer solchen Vorrichtung behandelt werden soll, müssen nämlich Vorrichtungen mit entsprechenden unterschiedlichen Kapazitäten verwendet bzw. installiert werden. Dies ist in der Regel unproblematisch, wenn der veranschlagte Bedarf sich über einen längeren Zeitraum nicht ändert. Problematisch wird dies jedoch, wenn in relativ kürzeren Zeitabständen der Kapazitätsbedarf der Vorrichtung wechselt, weil dann unter Umständen jedes mal eine neue, d.h. eine größere oder eine kleinere Vorrichtung installiert werden muß. Dies ist oftmals aber nicht möglich bzw. nicht ökonomisch, insbesondere, wenn ein derartiges Gerät in einem privaten Haushalt zur Wasserbehandlung in der Wasserzuleitung fest installiert ist.

Der Erfindung liegt daher die Aufgabe zugrunde, eine Vorrichtung der eingangs genannten Gattung dahingehend weiterzubilden, daß mit ihr auf sich ändernde Kapazitätsbedürfnisse in ökonomischer Weise reagiert werden kann.

Diese Aufgabe wird erfindungsgemäß dadurch gelöst, daß mehrere Flüssigkeitsbehandlungswege, im wesentlichen parallel zueinander, wahlweise miteinander verbindbar sind.

Bei der erfindungsgemäßen Vorrichtung wird also nicht, wie bei der im vorhergehenden geschilderten bekannten Vorrichtung ein einziger, nicht unterteilter, mehr oder weniger großer Behandlungsraum verwendet, der letztlich auch die Baugröße der Vorrichtung insgesamt bestimmt, sondern der Behandlungsraum wird vorzugsweise in mehrere, zueinander im wesentlichen parallel verlaufende Behandlungswege unterteilt, und zwar mit Vorteil derart, daß die Anzahl der Behandlungswege in einfacher Weise verkleinert oder vergrößert werden kann, wodurch entsprechend in einfacher Weise die Größe des Behandlungsraumes insgesamt und damit die Kapazität der Vorrichtung geändert wird.

Die erfindungsgemäße Vorrichtung ist, um die Kapazitätsveränderung noch leichter durchführen zu können, vorzugsweise, jedenfalls im Bereich des Behandlungsraumes, aus modularen Bauelementen aufgebaut, und zwar vorzugsweise mit Hilfe von modularen Bauelementen, von denen wenigstens eines, vorzugsweise jedes Bauelement wenigstens einen Elektrodenbereich mit wenigstens einer Elektrode umfaßt. Die Vorrichtung kann also nach Art eines Baukastensystems kapazitiv erweitert oder verringert werden, was mit Vorteil auch in sehr kurzen Zeitabständen geschehen kann, vorzugsweise ohne daß die Vorrichtung insgesamt ausgebaut werden muß. Die Behandlungsarbeit muß für eine solche Änderung lediglich kurz unterbrochen werden, um ein oder mehrere Bauelemente hinzuzufügen bzw. von der Vorrichtung abzunehmen. Eine derartige Arbeit kann unter Umständen sogar von einem Laien vorgenommen werden, jedenfalls aber wahlweise von einem Sanitärinstallateur oder einem Elektroinstallateur. Es sind insbesondere nicht beide Fachleute notwendig. Da eine solche Vorrichtung ohnehin über elektrische Bauelemente verfügt, wird vorzugsweise auch die Kapazitätserweiterung oder -verringerung der Vorrichtung von einem Elektrofachmann vorgenommen werden, der ansonsten von Sanitärtechnik keine tiefergehenden Kenntnisse zu besitzen braucht, da an dem eigentlichen Anschluß bzw. der eigentlichen Installation der Vorrichtung nichts geändert zu werden braucht.

Eine nächste Weiterbildung der Erfindung sieht vor, daß jedes modulare Bauelement einen Gehäusewandungsbereich umfaßt, so daß zur Veränderung der Kapazität der erfindungsgemäßen Vorrichtung nicht tief in das Innere der Vorrichtung eingegriffen zu werden braucht, sondern es werden lediglich auch nach außen in Erscheinung tretende Teile ergänzt oder ausgewechselt, wonach sich jedes mal quasi von selbst wieder ein vollständiges Gehäuse ergibt.

Eine nächste Weiterbildung, für die auch selbständiger Schutz beansprucht wird, sieht vor, daß jedes Bauelement weitgehend plattenförmig ausgebildet ist, die Vorrichtung also zumindest im Behandlungsbereich schichtweise aufgebaut wird. Vorzugsweise sind die modularen Bauelemente stapelbar ausgebildet. Nach einer bevorzugten Ausführungsform der Vorrichtung sind im Bauelementenstapel (automatisch) miteinander kontaktierende Elektro-Verbindungselemente für die Elektroden-Stromversorgung vorgesehen, so daß allein durch den Stapelvorgang auch automatisch die korrekte Stromversorgung der jeweils in den Bauelementen enthaltenden Elektroden gewährleistet ist. Beispielsweise können hierfür einfache Steckverbindungen mit einfachen positiven und negativen bzw. männlichen und weiblichen Elementen, vorgesehen sein.

Eine nächste Weiterbildung der Erfindung, für die ebenfalls selbständiger Schutz beansprucht wird, sieht vor, daß jedes plattenförmige modulare Bauelement, vorzugsweise in seinen Endbereichen, Flüssigkeits-Durchtrittsöffnungen als Flüssigkeitszuleitungs- und -ableitungskanalabschnitte aufweist, die einen Elektrodenbereich zwischen sich begrenzen, der seinerseits eine Begrenzungsfläche eines Flüssigkeitsbehandlungsweges definiert.

Die modularen Bauelemente umfassen also nicht nur vorzugsweise Gehäusewandungsabschnitte, als die bei der geschilderten bevorzugten Auführungsform vorzugsweise die Randbereiche jedes Bauelementes, vorzugsweise selbstdichtend, ausgebildet sind, sondern sie umfassen auch Abschnitte der Flüssigkeitszuleitung und der Flüssigkeitsableitung, zwischen denen die zu behandelnde Flüssigkeit entlang der dazwischenliegenden, mit Elektroden ausgerüsteten Plattenfläche fließt. Es ergeben sich somit bei einer solchen Vorrichtung im wesentlichen als Ebenen ausgebildete Behandlungswege, die sich parallel zueinander zwischen der Zuleitung und der Ableitung erstrecken, und zwar als Spaltzwischenräume zwischen zwei einander benachbarten Elektrodenbereichen einander im Stapelbehälter benachbarter plattenförmiger Bauelementen. Diese Behandlungsebenen sind bei einer installierten Vorrichtung vorzugsweise horizontal orientiert. Je höher ein solcher Stapel aufgebaut wird und je mehr Zwischenräume als Behandlungsebenen vorhanden sind, desto größer ist der mögliche Durchfluß und damit die Kapazität der so aufgebauten Vorrichtung.

Eine weitere Weiterbildung der Erfindung, für die ebenfalls selbständiger Schutz beansprucht wird, sieht vor, daß der Elektrodenbereich wenigstens eine, einen Kern des Elektrodenbereichs bildende Elektrode und eine elektrische Isolierung als Ummantelung oder Beschichtung der Elektrode umfaßt und daß diese Isolierung eine ihre Dicke bezüglich der Elektroden örtlich varierende, vorzugsweise wellige Oberflächenstruktur oder Oberflächenprofilierung aufweist. Hierdurch wird, aufgrund des sich ändernden Abstandes von der Elektrode, auch die Feldstärke im örtlichen Verlauf der Oberfläche verändert. Außerdem werden hierduch die Begrenzungen des Behandlungsweges uneben. Beides führt zu erwünschten Durchmischungen, Turbulenzen und dergleichen der zu behandelnden Flüssigkeit, so daß sich hierdurch der Wirkungsgrad der Vorrichtung verbessert. Die Oberflächenstruktur folgt vorzugsweise einem regelmäßigen Muster, vorzugsweise einem Fischgrätenmuster, welches als Grundform eine Winkelform aufweist, die bevorzugt mit ihrer Winkelspitze in Flüssigkeitsflußrichtung weist.

Außerdem kann jeder Elektrodenbereich Durchbrechungen aufweisen, die vorzugsweise dem Oberflächenmuster folgen. Hierdurch wird die Verwirbelung und Vermischung der zu behandelnden Flüssigkeit verstärkt, so daß sich auch hierdurch der Wirkungsgrad der Vorrichtung verbessern kann.

Eine bevorzugte Ausführungsform der erfindungsgemäßen Vorrichtung sieht vor, daß eine Einspanneinrichtung für den Bauelementenstapel vorhanden ist, so daß dieser Stapel, unabhängig von der jeweils vorhandenen Anzahl von Bauelementen, mechanisch sicher fixiert und gehalten ist.

Es kann, beispielsweise bei Wartungsarbeiten der Vorrichtung, vorkommen, daß sämtliche Bauelemente der Vorrichtung entnommen werden müssen, die Elektroden aufweisen, die erfindungsgemäße Vorrichtung also bis zur Funktionsunfähigkeit zerlegt werden muß. In einem solchen Falle soll der Flüssigkeitsfluß nicht unbedingt lang andauernd unterbrochen werden, insbesondere dann nicht, wenn eine erfindungsgemäße Vorrichtung beispielsweise verwendet wird, um in einem Haushaltsbereich das Trinkwasser zu behandeln. Es ist dann besser, das Wasser unbehandelt durch die Vorrichtung fließen zu lassen, statt die Wasserzufuhr über längere Zeit zu sperren. Für einen solchen Zweck ist nach einer Weiterbildung der Erfindung vorgesehen, daß sie ein modulares Bauelement als dummyartiges Ersatz-Bauelement umfaßt, welches bei Abwesenheit jeglicher Bauelemente mit Elektrodenbereichen anstelle derartiger Bauelemente montiert werden kann, um die Vorrichtung zumindest provisorisch so komplett zu halten, daß ein Flüssigkeitsdurchfluß möglich ist, auch wenn wahrend dieser Zeit keine Behandlung stattfinden kann.

Weiter ist vorzugsweise vorgesehen, daß die Vorrichtung eine Schutzhaube aufweist, die insbesondere den Behandlungsbereich der Vorrichtung umschließt. Die Bauelemente selbst sollen vorzugsweise Gehäusewandungsbereiche aufweisen, so daß Flüssigkeitsleckagen in der Regel nicht zu befürchten sind. Die Schutzhaube soll somit im wesentlichen dazu dienen, die wichtigen Teile der Vorrichtung vor Verschmutzung zu schützen und Personen vor Verletzungen oder elektrischen Kontakten zu schützen.

Eine andere Weiterbildung der Erfindung, für die auch selbständiger Schutz beansprucht wird, sieht vor, daß die Vorrichtung einen Flüssigkeitszulauf und einen Flüssigkeitsablauf aufweist, die vorzugsweise in einer gemeinsamen Ebene liegen, und einen Flüssigkeitsbehandlungsraum mit einem oder mehreren Behandlungswegen, welcher als Baueinheit derart ausgebildet und an den Zulauf und den Ablauf angesetzt ist, daß sich ein im wesentlichen U-förmiger Flüssigkeitsdurchfluß durch die Vorrichtung ergibt.

Auf diese Weise wird mit Vorteil ein kompletter Abbau und Anbau des Behandlungsbereiches der Vorrichtung ermöglicht, ohne daß hierfür der Zulauf und der Ablauf der Vorrichtung demontiert werden müßte. Insbesondere ist auf diese Weise ein einfaches Auswechseln von Bauelementen des Behandlungsbereiches möglich.

Teile des Zulaufes und des Ablaufes können aus einem anderen Metall, beispielsweise vorzugsweise aus Bronze, gefertigt sein, als Teil des Behandlungsbereiches der Vorrichtung, insbesondere Teile des Grundgerüstes des Behandlungsbereiches, die beispielsweise aus Aluminium gefertigt sein könnten, ohne daß diese unterschiedlichen Metalle unmittelbar elektrisch miteinander kontaktieren, so daß Lokalelemente und daraus resultierende Korrosionen vermieden werden. Bei der im vorhergehenden geschilderten Ausführungsform der erfindungsgemäßen Vorrichtung ist es sogar möglich, zu vermeiden, daß diese unterschiedlichen Metalle mittelbar über die Flüssigkeit miteinander elektrisch verbunden sind. Entsprechend der eingangs zum Stand der Technik zitierten Vorrichtung soll auch bei der erfindungsgemäßen Vorrichtung vorzugsweise die Flüssigkeit selbst unmittelbar mit einer Elektrode bzw. mit einem Elektrokontakt kontaktiert werden und damit in gewisser Weise selbst als vorzugsweise gegenpolige Elektrode nutzbar werden. Die Flüssigkeit fließt aber vom Zulauf zum Ablauf (nur) an den Elektrodenbereichen vorbei, die eine elektrisch isolierende Ummantelung aufweisen, so daß die Flüssigkeit im Zweifel mit dem Metall des Behandlungsbereiches überhaupt nicht in Kontakt kommt, sondern nur das Metall des Zulaufes und des Ablaufes kontaktiert.

Eine andere Weiterbildung der Erfindung, für die selbständiger Schutz beansprucht wird, sieht vor, daß ein bzw. jeder Flüssigkeitsbehandlungsweg wenigstens entlang eines Abschnittes durch eine im wesentlichen tunnelförmige, vorzugsweise im wesentlichen röhrenförmige Elektrode führt. Als Behandlungswege sind somit bei dieser Ausführungsform der erfindungsgemäßen Vorrichtung Kanäle vorgesehen. Auch hier ist vorzugsweise die Anzahl der Kanäle zur Veränderung der Kapazität der erfindungsgemäßen Vorrichtung variierbar.

Um das elektrische Feld im Innern der tunnelförmigen Elektrode zu verbessern ist nach einer Weiterbildung vorzugsweise jeder tunnelförmigen Elektrode ein Elektrokontakt für die Flüssigkeit zugeordnet, vorzugsweise derart, daß er im wesentlichen axial durch die Elektrode verläuft und (nur) innerhalb des Elektrodenbereiches entisoliert, also blank, ist. Bei einer derartigen Ausbildung ist die tunnelförmige Elektrode mit dem axialen Elektrokontakt somit nach Art eines Zylinderkondensators aufgebaut.

Die eingangs genannte bekannte gattungsgemäße Vorrichtung, wie auch vergleichbare Vorrichtungen, weisen in der Regel dadurch ein weiteres Problem auf, daß die Lebensdauer wesentlicher Bestandteile der Vorrichtung, nämlich insbesondere der Elektroden der Vorrichtung, dadurch begrenzt ist, daß die Isolierung der Elektroden, die beispielsweise aus einem teflonartigen Kunststoff besteht, Flüssigkeit einzieht und in sich sammelt, so daß nach gewisser Zeit die Funktionsfähigkeit der Elektrode nicht mehr gewährleistet ist. Wenn ein solcher Fall eintritt, wurde häufig eine Elektrode gegen eine neue ersetzt bzw. unter Umständen sogar die Vorrichtung insgesamt als defekt ausgesondert.

Im Hinblick auf das eingangs genannte gattungsgemäße Verfahren liegt daher der Erfindung die Aufgabe zugrunde, ein Verfahren zur Verlängerung der Lebensdauer einer Vorrichtung zur Behandlung einer Flüssigkeit aufzuzeigen.

Diese Aufgabe wird erfindungsgemäß dadurch gelöst, daß ein oder mehrere Teile, vorzugsweise mit wenigstens einer Elektrode ausgerüstete modulare Baueinheiten, des den oder die Behandlungswege umfassenden Behandlungsraumes in bestimmten Zeitabständen, vorzugsweise reihum, aus der Vorrichtung entnommen, beheizt und wieder in die Vorrichtung eingesetzt werden.

Es ist nämlich erfindungsgemäß erkannt worden, daß beispielsweise Elektroden, deren Kunststoffbeschichtung Wasser gezogen haben, nicht unbedingt dauerhaft defekt sind, insbesondere auch nicht gealtert sind, sondern daß derartige Elektroden wieder einsatzfähig sind, sofern es gelingt, der Beschichtung das Wasser bzw. die sonstige Flüssigkeit wieder zu entziehen. Dies ist aber erfindungsgemäß mit einem einfachen Heiz- bzw. Trocknungsvorgang möglich.

Insbesondere bei einer erfindungsgemäßen Vorrichtung, die ohnehin in sehr einfacher Weise ein Auswechseln von Bauelementen vorsieht, ist es daher auch verfahrensmäßig in einfacher Weise möglich, gemäß dem erfindungsgemäßen Verfahren Teile wieder funktionsfähig zu machen. Vorzugsweise werden Elektroden einer erfindungsgemäßen Vorrichtung nach einer gewissen Betriebsdauer auf diese Weise wieder aufbereitet, und zwar nach Möglichkeit, indem die Elektroden nacheinander ausgeheizt werden, so daß ein fortlaufender Betrieb der Vorrichtung nicht gefährdet ist. Es muß hierfür beispielsweise nur eine Ersatzelektrode vorhanden sein. Ersatzelektroden sind aber ohnehin zu bevorraten, um ggf. die Kapazität der erfindungsgemäßen Vorrichtung vergrößern zu können. Nicht benötigte Elektroden können also vor dem Wiedereinsatz ohne weiteres und ohne Zeitverlust wieder aufbereitet werden.

Ausführungsbeispiele, aus denen sich weitere erfinderische Merkmale ergeben, sind in der Zeichnung dargestellt. Es zeigen:
- Fig. 1: einen Hochkantschnitt durch eine erfindungsgemäße Vorrichtung zur Aufbereitung von Flüssigkeiten,
- Fig. 2: einen Querschnitt der Vorrichtung gemäß Fig. 1,
- Fig. 3: das schematische Schaltbild einer Hochspannungsquelle für eine Vorrichtung gemäß den Fig. 1und 2,
- Fig. 4: einen der Fig. 1 entsprechenden Schnitt durch die erfindungsgemäße Vorrichtung in schematisch vereinfachter Darstellung bei verkleinerter Gerätekapazität,
- Fig. 5: eine schematisch vereinfachte Draufsicht auf ein plattenförmiges modulares Bauelement für eine erfindungsgemäße Vorrichtung,
- Fig. 6 bis 8: detailliertere Ansichten eines modularen plattenförmigen Bauelementes gemäß Fig. 5 und
- Fig. 9: eine Detaillvergrößerung des Bauelementes gemäß Fig. 6

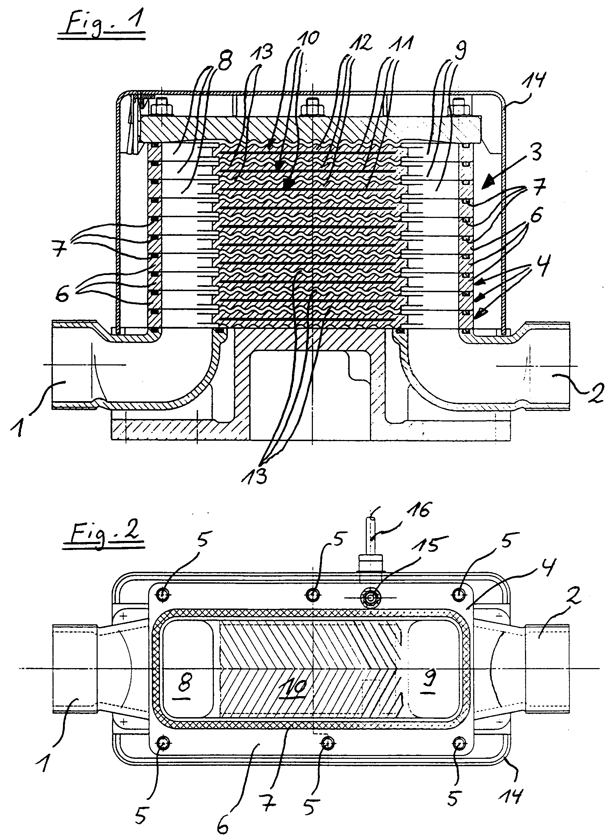

Fig. 1 zeigt in einem Hochkantschnitt, vorzugsweise einem Vertikalschnitt, eine erfindungsgemäße Vorrichtung zur Behandlung von Flüssigkeiten.

Die erfindungsgemäße Vorrichtung weist einen Flüssigkeitszulauf 1 und einen Flüssigkeitsablauf 2 auf. Der Zulauf und der Ablauf bzw. die entsprechenden Leitungen und Anschlüsse, sind vorzugsweise aus Bronze gefertigt.

Zwischen dem Zulauf 1 und dem Ablauf 2 ist der Flüssigkeits-Behandlungsbereich 3 der Vorrichtung angesetzt, und zwar ist dieser Behandlungsbereich 3 so ausgebildet und an Zulauf 1 und Ablauf 2 angesetzt, daß die zu behandelnde Flüssigkeit die Vorrichtung vom Zulauf 1 zum Ablauf 2 im wesentlichen U-förmig durchfließt. Die Grundgerüstelemente des Behandlungsbereiches 3 sind vorzugsweise aus Aluminium gefertigt.

Der Behandlungsbereich 3 der Vorrichtung umfaßt im wesentlichen einen Stapel von plattenförmigen modularen Bauelementen 4. Dieser Stapel von plattenförmigen Bauelementen 4, wird durch eine Einspanneinrichtung 5 zusammengefaßt und an Grundelementen des Behandlungsbereiches 3 gehalten.

Jedes plattenförmige oder auch waffelförmige Bauelement 4 weist einem umlaufenden Randbereich 6 auf, der mit einer Dichtung 7 ausgerüstet ist und zusammen mit den Randbereichen der anderen Bauelemente 4 die innere und eigentliche Gehäusewandung des Behandlungsbereiches 3 bildet, die flüssigkeitsdicht ausgebildet und aufgrund der Einspanneinrichtung 5 zusammengehalten ist. In ihren Endbereichen weist jedes plattenförmige Bauelement 4 Durchtrittsöffnungen 8, 9 zum Durchtritt der zu behandelnden Flüssigkeit auf, die den Zulauf 1 bzw. den Ablauf 2 in den Behandlungsbereich 3 flüssigkeitsleitend fortsetzen. Die Bereiche der plattenförmigen Bauelemente 4 jeweils zwischen den Durchtrittsöffnungen 8 und 9 sind als Elektroden bereiche 10 ausgebildet. Diese Elektrodenbereiche 10 enthalten in ihrem Innern jeweils wenigstens eine Elektrode 11, die mit einer Beschichtung bzw. Ummantelung 12 versehen ist. Die in dem Stapel der plattenförmigen Bauelemente 4 verbleibenden Zwischenräume jeweils zwischen den Elektrodenbereichen 10 einander benachbarter Bauelemente 4 sind die zueinander parallel verlaufenden, im wesentlichen in Form von Ebenen ausgebildeten Flüssigkeitsbehandlungswege 13, die die Zulaufseite mit der Ablaufseite der Vorrichtung verbinden und durch die somit die Flüssigkeit vom Zulauf 1 zum Ablauf 2 zur Behandlung hindurchfließt.

Vorzugsweise sind die Elektroden 11 der plattenförmigen Bauelemente 4 jeweils an denselben Pol einer Gleich-Hochspannungsquelle angeschlossen, vorzugsweise an dem Pluspol, so daß sich in den Zwischenräumen zwischen den Elektrodenbereichen 10, also in den Behandlungswegen 13, entsprechende elektrische Felder ausbilden, die auf die Flüssigkeit zu ihrer Behandlung einwirken. Der Gegenpol der Spannungsquelle, also vorzugsweise der Minuspol ist vorzugsweise an die zu behandelnde Flüssigkeit direkt angeschlossen, indem beispielsweise ein entsprechender Elektrokontakt an dem Zulauf 1 angebracht wird. Es ist theoretisch auch denkbar, elektrostatisch aufgeladene Elektroden 11 zu verwenden, die keine Stromversorgung benötigen.

Die elektrisch isolierende Beschichtung 12 eine Elektrodenbereiches 10, die die jeweilige Elektrode 11 von der Flüssigkeit isoliert und in dem unteren Bereich der Vorrichtung auch die Metalle des Zulaufes, des Ablaufes und des Behandlungsbereiches 2 voneinander isoliert, weist jeweils eine Oberflächenstruktur bzw. -profilierung auf. In dem in Fig. 1 dargestellten Schnitt erscheint diese Profilierung als Wellenlinie, wobei jeweils die Erhebungen eines Bauelementes 4 mit den Vertiefungen des jeweils benachbarten Bauelementes korrespondieren, so daß auch die Behandlungswege 13 selbst einen entsprechend wellenförmigen Verlauf aufweisen. Hierdurch wird eine relativ kompakte Bauweise des Behandlungsbereiches 3 erreicht. Es wäre allerdings auch denkbar, Vertiefung mit Vertiefungen und Erhebungen mit Erhebungen korrespondieren zu lassen, so daß sich die Behandlungswege 13 in ihrem Verlauf ständig verbreitern und wieder verjüngen.

Diese Profilierung sorgt einerseits mechanisch für eine Verwirbelung der Flüssigkeit in den Behandlungswegen 13, aber auch für eine sich örtlich über den Verlauf der Behandlungswege 13 ergebende Änderung des elektrischen Feldes, weil sich die Dicke der Isolierung der Elektrode 11 jeweils ändert und damit auch die Feldstärke an der Oberfläche der Isolierung einmal abnimmt und einmal zunimmt. Die dadurch entstehenden Vermischungen und Turbulenzen sorgen für einen besonders hohen Wirkungsgrad des Behandlungsbereiches 3.

Der gesamte Behandlungsbereich 3 ist außen zusätzlich mit einer Schutzhaube 14 abgedeckt und geschützt.

Fig. 2 zeigt einen Querschnitt durch die Vorrichtung gemäß Fig. 1 und zwar oberhalb des Zulaufes 1 und des Ablaufes 2 durch den Stapel der Bauelemente 4 hindurch, so daß in der Fig. 2 unter anderem eine Draufsicht auf ein solches Bauelement 4 zu erkennen ist. Gleiche Bauelemente sind mit den gleichen Bezugszahlen bezeichnet wie in Fig. 1 und wie auch in den übrigen Figuren.

Zunächst einmal ist in der Fig. 2 zu erkennen, daß sich der Zulauf 1 und der Ablauf 2 zum Behandlungsbereich 3 hin von einer Rohrform zu einer flachen Tubusform verflachen, so daß auch die Durchtrittsöffnungen 8 und 9 in den Bauelementen 4 mehr rechteckig ausgebildet sind. Außerdem ist die Ausbildung des Bauelementes 4 mit seinem umlaufenden Rand und der umlaufenden Dichtung 7 zur Ausbildung der Gehäusewandung des Behandlungsbereiches 3 zu erkennen. Innerhalb des Randbereiches 6 des Bauelementes 4 befindet sich außerdem eine elektrische Steckkontakt-Einrichtung 15, die mit einer elektrischen Anschlußleitung 16 verbunden ist. Jedes Bauelement 4 weist eine entsprechende Steckkontakt-Einrichtung 15 auf, die so ausgebildet ist, daß diese Steckkontakte 15 im Stapel der Bauelemente 4 automatisch eine durchgehende elektrische Verbindung bilden, die für die Stromversorgung jeder Elektrode 11 sorgt. Eine nach außen führende Anschlußleitung 16 ist daher nur in einem einzigen Bereich der Vorrichtung notwendig. Die elektrische Verbindung stellt sich also automatisch allein durch die Durchführung des Stapelvorganges her. In der Fig. 2 ist erkennbar, daß die Spannstangen der Einspanneinrichtung 5 an den Längsseiten der Bauelemente 4 unterschiedlich angeordnet sind, so daß nur eine solche Befestigung der Bauelemente 4 im Stapel mit der Einspanneinrichtung 5 möglich ist, bei der sich auch wirklich die Kontakte 15 aller Bauelemente 4 überdecken und miteinander verbinden.

Außerdem ist in der Fig. 2 erkennbar, daß die Oberflächenstruktur der Beschichtung 12 des Elektrodenbereiches 10 eines Bauelementes 4 einem Fischgrätenmuster folgt, welches jeweils Paare von zueinander winkelig angeordneten Gräten zeigt, wobei die Spitze dieser Abwinkelung in Fließrichtung der Flüssigkeit weist. Nur jedes zweite Grätenpaar dieses Fischgrätenmusters ist Teil der Beschichtung 2 und enthält einen Teil der Elektrode 11, während die jeweils dazwischen liegenden Fischgrätenpaare als Durchbrechungen des Elektrodenbereiches 10 ausgebildet sind, durch die also die Flüssigkeit hindurchtreten kann, d.h. von einem Behandlungsweg 13 in einen nächsthöheren oder nächsttieferen Behandlungsweg 13 wechseln kann. Auch durch diese Maßnahme wird eine Durchmischung und Verwirbelung der zu behandelnden Flüssigkeit begünstigt, wodurch ebenfalls der Wirkungsgrad des Behandlungsbereiches 3 vergrößert wird.

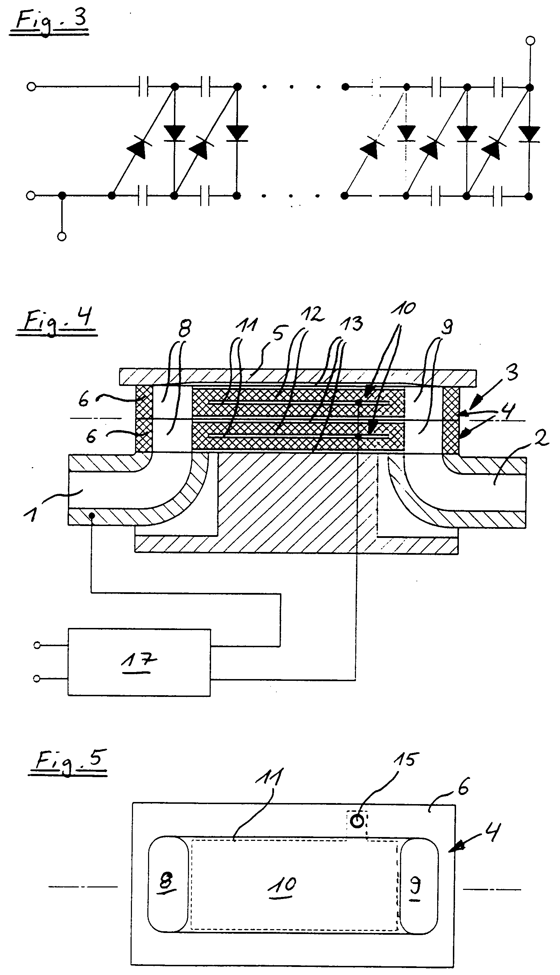

In der Fig. 3 ist ein einfaches schematischen Schaltbild einer verwendbaren Gleich-Hochspannungsquelle dargestellt. Gezeigt ist eine übliche Kondensator-Gleichrichter-Kaskadenschaltung, die nicht eingehend erläutert werden muß. Es können, wie bereits dargelegt, an einem Pol dieser Spannunsquelle sämtliche Elektroden 11 des Behandlungsbereiches angeschlossen werden, während die Flüssigkeit selbst über einen entsprechenden Elektrokontakt, der beispielsweise am Zulauf 1 liegt, mit dem anderen Pol der Spannungsquelle verbunden wird.

Ein solcher prinzipieller elektrischer Anschluß ist in der Fig. 4 in einer schematisch vereinfachten Darstellung angedeutet. Die Spannungsquelle gemäß Fig. 3 ist in der Fig. 4 lediglich als Schaltungsblock 17 angedeutet. Allerdings kann auch eine Vorrichtung in der schematischen Einfachheit der Fig. 4 erfindungsgemäß arbeiten, da alle wesentlichen Bestandteile der erfindungsgemäßen Vorrichtung vorhanden sind. Insbesondere sind Oberflächenprofilierungen der Beschichtugnen 13 und Durchbrechungen der Elektrodenbereiche 10 nicht unbedingt notwendig.
In der Fig. 4 ist zudem angedeutet, daß unter Beibehaltung der Funktionsweise der erfindungsgemäßen Vorrichtung der Stapel von Bauelementen 4 ohne weiteres und in einfacher Weise vergrößert oder verkleinert werden kann, je nach dem welcher Kapazitätsbedarf für die Vorrichtung vorliegt, indem einfach die Anzahl der Bauelemente 4 verringert oder vergrößert wird und die Einspanneinrichtung 5 lediglich entsprechend nachgeführt wird.

In ähnlicher schematischer Einfachheit wie die Fig. 4 zeigt die Fig. 5 eine isolierte Draufsicht auf ein plattenförmiges Bauelement 4, bei dem einige charakteristische Merkmale durch diese zeichnerische Vereinfachung hervorgehoben sind. Mit einer gestrichelten Linie ist in der Fig. 5 angedeutet, daß die Elektrode 11 im wesentlichen als Metallplatte ausgebildet sein kann, die eine Zunge aufweist, die zum Steckkontakt 15 führt.

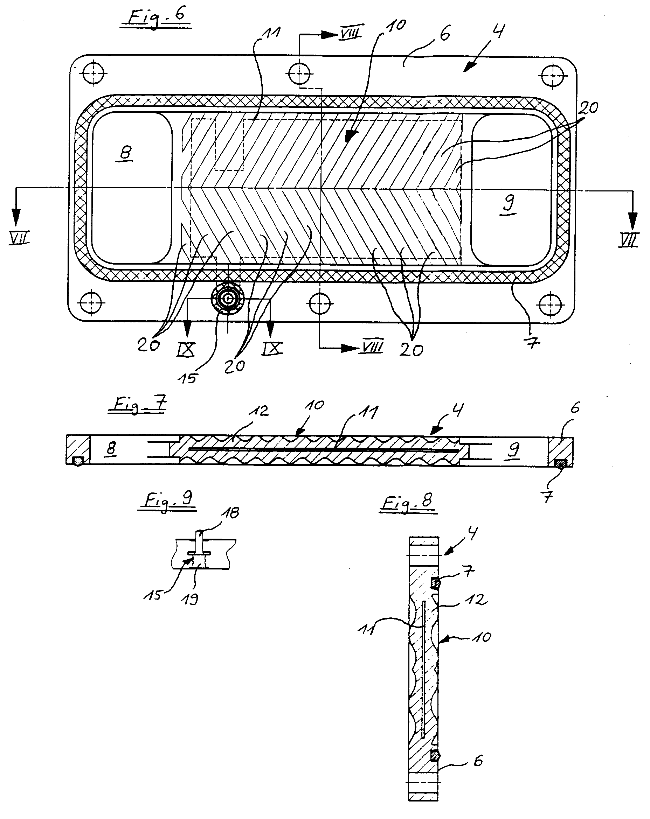

Die Fig. 6 bis 8 zeigen noch einmal in einer vergrößerten, detaillierteren Darstellung ein einzelnes plattenförmiges Bauelement 4 in verschiedenen Ansichten. Die Fig. 6 zeigt eine Draufsicht, die Fig. 7 einen Längsschnitt entlang der mit VII-VII bezeichneten strichpunktierten Linie in der Fig. 6 und die Fig. 8 eine Querschnitt entlang der in Fig. 6 mit VIII-VIII bezeichneten strichpunktierten Linie.

Die Fig. 9 zeigt eine Detaillvergrößerung entlang einer Schnittlinie, die in der Fig. 6 mit IX-IX bezeichnet ist und durch einen Steckkontakt 15 verläuft. In dieser Detaillvergrößerung gemäß Fig. 9 ist erkennbar, daß jeder Steckkontakt 15 an einer Seite ein positives bzw. männliches Element 18 und an der anderen Seite ein negatives bzw. weibliches Element 19 aufweist, damit in einem Stapelvorgang ein fortlaufender Kontakt automatisch möglich ist.

Die übrigen Details der Fig. 6 bis 9 sind im wesentlichen schon in den vorhergehenden Figuren beschrieben und in diesen Figuren nur größer herausgezeichnet. Lediglich die fischgrätenförmigen Durchbrechungen im Elektrodenbereich 10 haben in der Fig. 6 eine zusätzliche Bezugszahl 20 erhalten.

Die Gesamtheit der Figuren läßt erkennen, daß bei dem dargestellten Ausführungsbeispiel einer erfindungsgemäßen Vorrichtung in sehr einfacher Weise die Größe bzw. Kapazität des Behandlungsbereiches 3 an den jeweiligen Kapazitätsbedarf, d.h. die Flüssigkeitsbehandlungsmenge pro Zeiteinheit, angepaßt werden kann, indem die Anzahl der Bauelemente 4 vergrößert und verkleinert wird. Unabhängig von dieser Anzahl ist immer eine funktionsfähige Vorrichtung vorhanden, die flüssigkeitsdicht eine entsprechende Gehäusewandung im Behandlungsbereich aufweist. Selbst für den Fall, daß sämtliche Bauelemente 4 mit Elektroden 11 aus der Vorrichtung entnommen werden müssen, könnte ein dummyartiges Bauelement vorgesehen werden, das die Vorrichtung soweit verschließt, daß ein flüssigkeitsdichter Übergang der Flüssigkeit vom Zulauf 1 zum Ablauf 2 möglich ist. Ein solches dummyartiges Bauelement müßte lediglich im wesentlichen haubenartig ausgebildet sein oder es werden ein oder mehrere plattenförmige Bauelemente 4 mit einer herkömmlichen Einspanneinrichtung 5 verwendet, die lediglich keine Elektroden 11 aufweisen, aber ansonsten entsprechend der Bauelemente 4 ausgebildet sind.

## Patentansprüche

1. Vorrichtung zur Behandlung einer Flüssigkeit, insbesondere einer wässrigen Flüssigkeit, vorzugsweise zur Vermeidung, Verminderung oder Beseitigung von Ablagerungen und/oder Korrosion in von der behandelten Flüssigkeit durchströmten Leitungen oder Gefäßen,
umfassend wenigstens einen Flüssigkeitsbehandlungsweg, dem wenigstens eine gegenüber dem Flüssigkeitsbehandlungsweg vorzugsweise elektrisch isolierte Elektrode zugeordnet ist, vorzugsweise wenigstens einen Elektrodenkontakt, bevorzugt als gegengepolte Elektrode zur vorgenannten Elektrode, für die Flüssigkeit und vorzugsweise eine elektrische Spannungsquelle, insbesondere eine Hochspannungsquelle, bevorzugt eine Gleichspannungsquelle, zur elektrischen Versorgung der Elektrode bzw. Elektroden,
dadurch gekennzeichnet,
daß mehrere Flüssigkeitsbehandlungswege (13), im wesentlichen parallel zueinander, (wahlweise) miteinander verbindbar sind.

2. Vorrichtung nach Anspruch 1, gekennzeichnet durch Flüssigkeitsbehandlungswegbegrenzungen umfassende, ohne prinzipielle Änderung des Vorrichtungsaufbaus der Vorrichtung hinzufügbare oder von der Vorrichtung entfernbare modulare Bauelemente (4).

3. Vorrichtung nach Anspruch 2, dadurch gekennzeichnet, daß ein modulares Bauelement (4) wenigstens einen Elektrodenbereich (10) mit wenigstens einer Elektrode (11) umfaßt.

4. Vorrichtung nach Anspruch 3, dadurch gekennzeichnet, daß jedes modulare Bauelement (4) einen Gehäusewandungsbereich (6) umfaßt.

5. Vorrichtung, insbesondere nach einem der Ansprüche 2 bis 4, dadurch gekennzeichnet, daß wenigstens ein modulares Bauelement (4) im wesentlichen weitgehend plattenförmig ausgebildet ist.

6. Vorrichtung nach einem der Ansprüche 2 bis 5, dadurch gekennzeichnet, daß die modularen Bauelemente (4) stapelbar ausgebildet sind.

7. Vorrichtung nach Anspruch 6, gekennzeichnet durch im Bauelementenstapel (automatisch) miteinander kontaktierende Elektro-Verbindungselemente (15) für die Elektroden-Stromversorgung.

8. Vorrichtung, insbesondere nach Anspruch 4 und 5 oder 6 oder 7, dadurch gekennzeichnet, daß jedes plattenförmige modulare Bauelement (4), vorzugsweise in seinen Endbereichen, Flüssigkeits-Durchtrittsöffnungen (8,9) als Flüssigkeitszuleitungs- und ableitungskanalabschnitte aufweist, die einen Elektrodenbereich (10) zwischen sich begrenzen, der seinerseits eine Begrenzungsfläche eines Flüssigkeitsbehandlungsweges (13) definiert.

9. Vorrichtung, insbesondere nach Anspruch 3, 4 oder 8, dadurch gekennzeichnet, daß der Elektrodenbereich (10) wenigstens eine, einen Kern des Elektrodenbereiches (10) bildende Elektrode (11) und eine elektrische Isolierung (12) als Ummantelung oder Beschichtung der Elektrode (11) umfaßt, und daß diese Isolierung (12) eine ihre Dicke bezüglich der Elektrode (11) örtlich variierende, vorzugsweise wellige, Oberflächenstruktur aufweist.

10. Vorrichtung nach Anspruch 9, dadurch gekennzeichnet, daß die Oberflächenstruktur einem regelmäßigen Muster, vorzugsweise einem, bevorzugt in Flüssigkeitswegrichtung weisenden Fischgrätenmuster folgt.

11. Vorrichtung nach Anspruch 9 oder 10, gekennzeichnet durch vorzugsweise regelmäßig angeordnete, vorzugsweise dem Strukturmuster folgende Durchbrechungen (20) des Elektrodenbereiches (10).

12. Vorrichtung nach Anspruch 4 und 8 und eventuell einem weiteren der vorhergehenden Ansprüche, dadurch gekennzeichnet, daß der Außenrand (6) des Bauelementes (4) als vorzugsweise selbstdichtend ausgebildeter Gehäusewandungsabschnitt ausgebildet ist.

13. Vorrichtung nach Anspruch 6 und eventuell einem der weiteren Ansprüche, gekennzeichnet durch eine Einspanneinrichtung (5) für den Bauelementenstapel.

14. Vorrichtung nach Anspruch 2 und 3 und eventuell einem der weiteren Ansprüche, dadurch gekennzeichnet, daß ein modulares Bauelement (4) als dummyartiges Ersatz-Bauelement bei Abwesenheit jeglicher Bauelemente (4) mit Elektrodenbereichen (10) vorgesehen ist.

15. Vorrichtung nach einem der vorhergehenden Ansprüche, gekennzeichnet durch eine den die Behandlungswege (13) aufweisenden Behandlungsraum umschließende, vorzugsweise abnehmbare Schutzhaube (14).

16. Vorrichtung, insbesondere nach einem oder mehreren der vorhergehenden Ansprüche, dadurch gekennzeichnet, daß sie einen Flüssigkeitszulauf (1) und einen Flüssigkeitsablauf (2) aufweist, die vorzugsweise in einer gemeinsamen Ebene liegen,und einen Flüssigkeitsbehandlungsraum (3) mit einem oder mehreren Behandlungswegen (13) welcher als Baueinheit derart ausgebildet und an den Zulauf (1) und den Ablauf (2) angesetzt ist, daß sich ein im wesentlichen U-förmiger Flüssigkeitsdurchfluß durch die Vorrichtung ergibt.

17. Vorrichtung nach Anspruch 16, dadurch gekennzeichnet, daß der Zulauf (1) und der Ablauf (2) einerseits und Teile des Behandlungsraumes (3) andererseits aus unterschiedlichen Metallen, vorzugsweise aus Bronze und aus Aluminium, gefertigt und elektrisch gegeneinander isoliert sind.

18. Vorrichtung, insbesondere nach einem oder mehreren der vorgehenden Ansprüche, dadurch gekennzeichnet, daß ein bzw. jeder Flüssigkeitsbehandlungsweg (13) wenigstens entlang eines Abschnittes durch eine im wesentlichen tunnelförmige, vorzugsweise im wesentlichen röhrenförmige Elektrode führt.

19. Vorrichtung nach Anspruch 18, dadurch gekennzeichnet, daß jeder tunnelförmigen Elektrode ein Elektrokontakt für die Flüssigkeit zugeordnet ist, vorzugsweise derart, daß er im wesentlichen axial durch die Elektrode verläuft und (nur) innerhalb des Elektrodenbereiches entisoliert ist.

20. Verfahren zur Verlängerung der Lebensdauer einer Vorrichtung zur Behandlung einer Flüssigkeit nach einem oder mehreren der vorhergehenden Ansprüche, vorzugsweise nach Anspruch 3,
dadurch gekennzeichnet,
daß ein oder mehrere Teile, vorzugsweise mit wenigstens einer Elektrode ausgerüstete modulare Baueinheiten, des den oder die Behandlungswege umfassenden Behandlungsraumes in bestimmten Zeitabständen, vorzugsweise reihum, aus der Vorrichtung entnommen, beheizt und wieder in die Vorrichtung eingesetzt werden.
